# EUROPEAN PATENT APPLICATION

(11) **EP 4 668 842 A1**
(43) Date of publication of application: **24.12.2025**
(21) Application number: 23921845.6
(22) Date of filing: 16.02.2023
(51) Int. Cl.: H04W 28/02

(54) **DATA PROCESSING METHOD AND APPARATUS**

(71) Applicant: FUJITSU LIMITED, Kawasaki-shi, Kanagawa 211-8588 (JP)
(72) Inventor: YI, Su, Beijing 100022 (CN); LI, Guorong, Beijing 100022 (CN); JIA, Meiyi, Beijing 100022 (CN)
(74) Representative: Haseltine Lake Kempner LLP
(86) International application number: PCT/CN2023/076455
(87) International publication number: WO 2024/168688

(57) **Abstract**

Embodiments of the present disclosure provide a data processing method and apparatus, the method comprising: a terminal equipment sets a discard timer duration for a PDU Set; and the terminal equipment releases a PDU Set corresponding to an expired discard timer at a PDCP layer when a discard timer expires. According to the embodiments of the present disclosure, by performing enhancements related to PDU discarding at a PDCP layer, the problem of data resource utilization is solved, data congestion is avoided, and data transmission for a PDU Set can be better supported to achieve integrated data packet processing and differentiated PDU Set processing of the PDU Set, thereby improving user experience of XR and media services.

## Description

### FIELD

The present disclosure relates to the communication field.

### BACKGROUND

3GPP (3rd Generation Partnership Project) starts to study enhancements for eXtended Reality (XR) service in Release 18 (version), and the XR service refers to environment and human-machine interaction of all real and virtual combinations produced by computer technologies and wearable devices. Its application fields include but are not limited to entertainment, healthcare, education, etc. The XR service may include virtual reality (VR) service, augmented reality (AR) service and mixed reality (MR) service.

Virtual reality is a rendered version of released visual and audio scenarios. When an observer or user moves within limitations defined by an application program, rendering aims to simulate visual and auditory sensory stimuli in the real world as naturally as possible. Augmented reality refers to providing a user with additional information or artificially generated items, or content overlaid on its current environment. Mixed reality is an advanced form of AR, in which some virtual elements are inserted into a physical scenario, with the aim of providing an illusion that makes people feel these elements are a part of a real scenario.

A PDU set consists of one or more PDUs (Protocol Data Units), these PDUs carry a payload of an information unit generated at an application layer (for example, a frame or video slice for XR and media services). In some implementations, the application layer requires all PDUs in the PDU set to use corresponding information units. In other implementations, when some PDUs are lost, the application layer may still recover all or part of the information units. It should be noted that the PDU here refers to an application-level PDU, that is, a PDU in a PDU session layer, generally referring to an IP packet or an Ethernet frame. In each protocol stack of an AS (access stratum), there are corresponding PDUs for each sub-layer, such as a PDCP PDU (packet data convergence protocol PDU), an RLC PDU (radio link control PDU), etc.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

The inventor finds that in order to solve a processing demand of a PDU Set, at present, enhancements of a control plane and a user plane are proposed for downlink data transmission. In downlink transmission, for how to utilize the above-mentioned enhancement information, needs to be further standardized and technical implemented. In addition, for uplink transmission, currently there is no technology that can solve integrated packet handling of the PDU set and differentiated handling of the PDU Set, including how to perform discarding for PDU Set data.

For at least one of the above problems or other similar problems, the embodiments of the present disclosure provide a data processing method and apparatus.

According to an aspect of the embodiments of the present disclosure, a data processing apparatus is provided, configured in a terminal equipment, the apparatus comprising:
a setting unit configured to set a discard timer duration for a PDU Set; and
a processing unit configured to releases a PDU Set corresponding to an expired discard timer at a PDCP layer when a discard timer expires.

According to another aspect of the embodiments of the present disclosure, a data processing apparatus is provided, configured in a transmitting device, the transmitting device being a terminal equipment or a network device, the apparatus comprises:
a transmitting unit configured to transmit uplink or downlink data transmission; and
a processing unit configured to preform PDU Set discarding according to at least one of a transmitting side buffer, latency, and a PDU Set content criterion.

According to a further aspect of the embodiments of the present disclosure, a data processing apparatus is provided, configured in a transmitting device, the transmitting device being a terminal equipment or a network device, the apparatus comprises:
a transmitting unit configured to transmit a PDCP status report polling to a receiving device via a transmitting PDCP entity; and
a processing unit configured to receive a PDCP status report transmitted by a PDCP entity of the receiving device, and determine whether a transmitted PDU Set has been successfully delivered, and/or the number of PDUs in the PDU Set that have been successfully delivered, and/or a ratio of PDUs in the PDU Set that have been successfully delivered, according to the PDCP status report.

According to a further of the embodiments of the present disclosure, a data processing apparatus is provided, configured in a terminal equipment, the apparatus comprising:
a receiving unit configured to receive first information transmitted by a network device, the first information being used to indicate the terminal equipment to perform data discarding at a PDU Set level; and
a processing unit configured to perform data discarding at a PDU Set level according to the first information.

One of advantageous effects of the embodiments of the present disclosure lies in that by performing enhancements related to PDU Set discarding at a PDCP layer, the problem of resource utilization for data transmission is solved, data congestion is avoided, and data transmission for a PDU Set can be better supported to achieve integrated data packet handling of the PDU Set and differentiated PDU Set handling, thereby improving user experience of XR and media services.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of different mapping schemes from a PDU Set to a DRB;
FIG. 2 is a schematic diagram of a data processing method in the embodiments of the present disclosure;
FIG. 3 is a schematic diagram of an example of a mapping structure of a PDU Set at Layer 2;
FIG. 4 is another schematic diagram of a data processing method in the embodiments of the present disclosure;
FIG. 5 is a further schematic diagram of a data processing method in the embodiments of the present disclosure;
FIG. 6 is another schematic diagram of a data processing method in the embodiments of the present disclosure;
FIG. 7 is another schematic diagram of a data processing method in the embodiments of the present disclosure;
FIG. 8 is a schematic diagram of a data processing apparatus in the embodiments of the present disclosure;
FIG. 9 is another schematic diagram of a data processing apparatus in the embodiments of the present disclosure;
FIG. 10 is a further schematic diagram of a data processing apparatus in the embodiments of the present disclosure;
FIG. 11 is another schematic diagram of a data processing apparatus in the embodiments of the present disclosure;
FIG. 12 is another schematic diagram of a data processing apparatus in the embodiments of the present disclosure;
FIG. 13 is a schematic diagram of a terminal equipment in the embodiments of the present disclosure;
FIG. 14 is a schematic diagram of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of' or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future. In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB) and a 5G base station (gNB), etc., and may further includes a Remote Radio Head (RRH), a Remote Radio Unit (RRU), a relay or a low power node (such as femto, pico, etc.). And the term "base station" may include some or all functions of a base station, each base station may provide communication coverage to a specific geographic region. The term "cell" may refer to a base station and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera, or may be an IAB-MT, and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

At present, 5G technology is studying key issues, solutions and conclusions for supporting advanced media services, such as High Data Rate Low Latency (HDRLL) service, AR/VR/XR services and tactile/multimodal communication services. Goals include:
1. Supporting an enhanced function of a multi-mode service, including:
   - studying whether and how to enable an application program to provide users with relevant tactile and multi-mode data (such as audio, video and tactile data related to a specific time) at similar times, with a focus on a demand for enhanced policy control (such as QoS policy coordination).
2. Enhancing network exposure to support interaction between 5GS (a 5G system) and an application program, including:
   - studying whether and how to perform application synchronization and QoS (Quality of Service) policy coordination among multiple UEs or multiple QoS flows of each UE, and how to interact between AF and 5GS.
   - studying exposure of 5GS QoS information (such as QoS capabilities) and network conditions to an application program to achieve fast codec/rate adaptation, which helps to provide required QoE (for example, helping to alleviate 5GS congestion).
3. Studying whether and how to perform the following QoS and policy enhancements for XR service and media service transmission, including:
   - studying traffic characteristics of media services that can improve network resource utilization rate and QoE (Quality of Experience).
   - enhancing a QoS framework to support PDU Set granularity (such as a video/audio frame/tile, an application data unit, control information), wherein the PDU Set consists of PDUs with the same QoS requirements.
   - by taking into account different importance of PDU Sets, supporting differentiated QoS processing. For example, a packet belonging to a less important PDU Set is legally discarded to reduce resource waste.
   - whether and how to support uplink-downlink transmission coordination to meet a RTT (Round Trip Time) delay requirement between N6 termination points from a UE to a UPF (User Plane Function).
   - potential policy enhancements to reduce jitter to the greatest extent, with a focus on demand supply from an AF (Application Function) and expansion of a PCC (policy and charging control) rule.

The inventor finds that a PDU Set has different QoS demands, such as priority, importance, etc. Existing QoS models based on QoS flows cannot support different QoS demands of the PDU Set. Specifically, there are two major demands for processing of the PDU Set: integrated packet handling of the PDU Set, and differentiated handling of the PDU Set.

For the integrated packet handling of the PDU Set, in the current 5GS, the QoS flow is the finest granularity for QoS differentiation in PDU sessions. A 5G QoS characteristic is determined by a 5QI (5G QoS Identifier). This means that each packet in the QoS flow is handled according to the same QoS requirement.

For XR/media services, a group of packets is used to carry payloads (for example, frames, video slices/tiles) of the PDU Set. At a media layer, packets in such a PDU Set are decoded/processed as a whole. For example, a frame/video slice may be decoded only when all or a certain number of packets carrying the frame/video slice are successfully delivered. For example, only when all the frames on which the frame depends are successfully received, a client may decode frames in a GOP (group of pictures). Therefore, there are inherent interdependence in the media layer for packet groups in the PDU Set. If this dependency relationship between packets in the PDU Set is not taken into account, 5GS may perform scheduling with low efficiency. For example, 5GS might randomly discard one or more packets, but will attempt to deliver other packets in the same PDU Set, which are useless to the client, thus wasting radio resources.

For the differentiated handling of the PDU Set, features of XR/ media services lie in a high data rate and low latency. In Rel-18 version, it is expected that a 5GS QoS framework will be enhanced to support different QoS processing of a PDU Set. The PDU Set may carry different contents, such as I/B/P frames, slices/tiles in the I/B/P frames, etc. This key issue proposes to support differentiated QoS processing, considering different importance of the PDU Set, for example, resource waste is reduced by differentially treating packets (i.e, PDUs) belonging to a less important PDU Set.

In order to solve a processing demand of a PDU Set, at present, enhancements of a control plane and a user plane are proposed for downlink data transmission.

The control plane enhancement includes defining the following PDU Set QoS parameters:
a PDU Set Error Rate (PSER), which refers to an upper limit value of a proportion of PDU Sets that have been processed by a transmitting side of a link layer protocol (such as RLC in RAN accessed by 3GPP) but have not been successfully delivered to an upper layer of a corresponding receiving side (such as PDCP in the RAN accessed by 3GPP);
a PDU Set Delay Budget (PSDB), which defines an upper limit of a delay that a PDU Set may undergo in transmission between a UE and a N6 termination point of a UPF (that is, a time from when the first PDU in a PDU Set is received to when the last arrived PDU in the PDU Set is successfully delivered);
a PDU Set Integrated Indication (PSII), which indicates whether an application layer needs all PDUs in order to use a PDU Set.

Furthermore, the user plane enhancement includes the following information related to identifying the PDU Set by a UPF: a PDU Set sequence number, the last PDU mark of the PDU Set, a PDU sequence number inside the PDU Set, a size of the PDU Set, and a PDU Set Importance.

The inventor finds that in downlink transmission, for how to utilize the above-mentioned enhancement information, it needs to be further standardized and technical implemented. And for uplink transmission, currently there is no technology that can solve integrated packet handling of the PDU set and differentiated handling of the PDU Set, including how to perform data discarding for PDU Set.

In addition, for uplink traffic, a NAS (non-access stratum) of a UE may identify information related to the PDU Set. Similar to downlink traffic, these PDU Set-related information may include a PDU Set identifier, a PDU sequence number inside the PDU Set, a PDU Set Importance, and optionally, it may further include start and/or end markers of the PDU Set, size of the PDU Set, etc. The PDU Set Importance indicates a level of importance or priority of a PDU Set in an XRM (XR and multimedia) service flow, for example it may be high, medium, low, or expressed in numbers ranging from 0 to Nmax, which is used for differentiated handling of the PDU Set in RAN, such as priority handling, scheduling, data discarding, etc.

Moreover, for classification of upstream packets, during establishment/modification of a PDU session, a PDU Set Importance may be prepared for a UE according to S-NSSAI/DNN (Single Network Slice Selection Assistance Information/Data Network Name) of the PDU session. A PDU Set Importance rule may be transmitted to the UE from a 5GC (5G Core Network) via a N1 SM container defined in a session management process. The PDU Set Importance may be used by the UE to map the PDU Set to an appropriate MAC (medium access control) transport buffer. If the PDU Set Importance is used for mapping of a QoS flow or sub-QoS flow, the UE classifies and marks uplink user plane traffic according to QoS rules, i.e., association of uplink traffic of XRM with the QoS flow and/or sub-QoS flow.

In the present disclosure, it is considered that discarding and relevant operations for a PDU Set are performed at a PDCP (Packet Data Convergence Protocol) layer, the PDCP layer needs to know relevant information of an uplink data PDU Set. The information may be determined by UE implementation. That is, after an upper layer of the UE identifies PDU Set-related information, such information is delivered to the PDCP layer via an internal interface; it is also possible for the UE to deliver said information to the PDCP layer by adding the PDU Set-related information into an uplink data header of a SDAP (Service Data Adaptation Protocol) layer.

Various implementations of the present disclosure will be described below with reference to the drawings. These implementations are exemplary only and are not limitations to the present disclosure. In the following description, "if...", "in a case where..." and "when...", etc. have the same meaning, and may be interchangeable. In addition, in the following description, unless otherwise specified, the PDU refers to a PDU in a PDU session.

### Embodiments of a first aspect

In the related arts, a data discarding function of a PDCP layer is for a PDCP SDU (service data unit). A transmitting PDCP entity maintains a discard timer (discardTimer) for each PDCP SDU. The discard timer is configured only for a DRB (data radio bearer). A duration of the timer (i.e., an initial value when the timer is started) is configured by a higher layer (RRC, radio resource control). At a data transmitting side, when the PDCP layer receives an SDU from an upper layer, a new discard timer is started. When a discard timer for a certain PDCP SDU expires, or when a certain PDCP SDU is confirmed to be successfully delivered via a PDCP status report, the transmitting PDCP entity needs to discard the PDCP SDU and corresponding PDCP data PDU.

Under normal circumstances, configuration of a duration of the discard timer is for each DRB, i.e., each PDCP entity (that is, a PDCP entity corresponding to the DRB). Configuration of the duration of the discarded timer is related to a PDB (packet delay budget) of service. That is to say, the smaller the PDB is, the shorter the duration of the discard timer is. For XRM service, if multiple PDU Sets with different PSDBs are mapped to the same DRB, PDCP SDUs corresponding to these application layer PDU Sets need to use different durations of the discard timer.

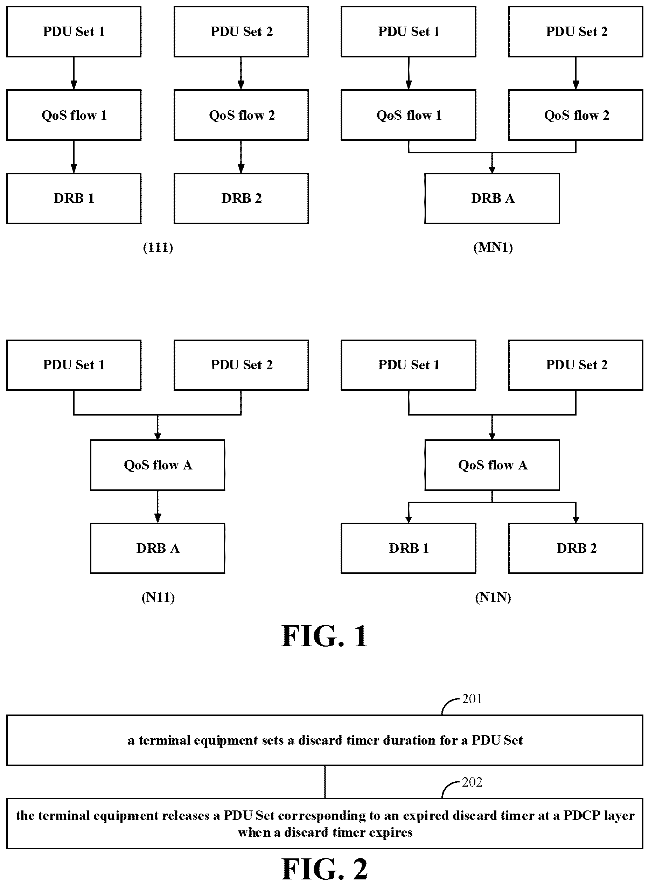

FIG. 1 is a schematic diagram of different mapping schemes from a PDU Set to a DRB. As shown in FIG. 1, according to a mapping method from a PDU Set to a QoS flow made in a NAS layer and a mapping method from a QoS flow to a DRB made in an AS layer, in both scheme NN1 and scheme N11, different PDU Sets (or different PDU Set types, that is, PDU Sets with different PDU Set Importance's) are mapped to the same DRB. Embodiments of the present disclosure are applicable to the schemes NN1 and N11 as shown in FIG. 1.

Embodiments of the present disclosure provide a data processing method, which is described from a terminal equipment side. FIG. 2 is a schematic diagram of a data processing method in the embodiments of the present disclosure. As shown in FIG. 2, the method includes:
201: a terminal equipment sets a discard timer duration for a PDU Set; and
202: the terminal equipment releases a PDU Set corresponding to an expired discard timer at a PDCP layer when a discard timer expires.

It should be noted that the above FIG. 2 only schematically describes the embodiments of the present disclosure, but the present disclosure is not limited to this. For example, an execution step of each operation may be adjusted appropriately, moreover some other operations may be increased or operations therein may be reduced. Persons skilled in the art may make appropriate modifications according to the above contents, not limited to the records in the above FIG. 2.

According to the above embodiments, the terminal equipment sets a discard timer duration for a PDU Set, which solves the problem of data discarding for the PDU Set in a wireless access network and may better support XR and media service applications.

In some embodiments, the terminal equipment sets a discard timer duration for each PDU Set based on a PSDB of the PDU Set.

For example, during uplink transmission, for a PDCP Data SDU corresponding to the PDU Set, the duration of the discard timer, configured for the DRB by the network, is not used. The terminal equipment obtains a PSDB according to application layer information and autonomously sets the duration of the discard timer for the PDU Set accordingly, that is, sets the duration of the discard timer for a PDCP SDU corresponding to a PDU in the PDU Set. Thereby, the problem that a network side does not know PDU Set relevant information for an uplink transmission is solved.

According to the above embodiments, description of TS 38.323 may be enhanced. For example, TS 38.323 may include the following description:

| |
|---|
| The transmitting PDCP entity shall maintain the following timers: |
| *a) discardTimer* |
| This timer is configured only for DRBs. The duration of the timer is configured by upper layers TS 38.331 [3]. In the transmitter, a new timer is started upon reception of an SDU from upper layer. For SDU belonging to an (application level) PDU Set, the duration of the timer is determined based on PSDB by UE implementation. |

In some other embodiments, the network device configures a discard timer value (duration) for a PDU Set Importance in each PDCP entity. That is, for a DRB including PDU Set data, the discard timer value is configured according to different PDU Set Importance. At a network side, there is no specific sequence number information of the PDU Set for uplink data, but a value of a PDU Set Importance included in each DRB may be known. A data type may be distinguished according to a PDU Set Importance, and the same timer duration is set for PDU Sets with the same PDU Set Importance.

In the above embodiments, the terminal equipment may receive configuration information transmitted by the network device (referred to as first configuration information), the first configuration information including a discard timer duration, configured by the network device for a PDU Set Importance in each PDCP entity of the terminal equipment. Thereby, the terminal equipment may set or confirm or obtain the duration of the discard timer according to the first configuration information.

In the above embodiments, PDU Sets with the same PDU Set Importance have the same discard timer duration.

According to the above embodiments, description of TS 38.323 may be enhanced. For example, TS 38.323 may include the following description:

| |
|---|
| The transmitting PDCP entity shall maintain the following timers: |
| *a) discardTimer* |
| This timer is configured only for DRBs. The duration of the timer is configured by upper layers TS 38.331 [3]. In the transmitter, a new timer is started upon reception of an SDU from upper layer. For SDU belonging to an (application level) PDU Set, the duration of the timer is based on PDU Set Importance and configured by upper layers TS 38.331. |

In the above embodiments, the network device may perform the above configuration via RRC signaling, that is, the first configuration information may be included in the RRC signaling. The RRC signaling may be an RRC reconfiguration (RRCReconfiguration) message. For example, a PDCP configuration IE of the RRC reconfiguration message includes a certain field (referred to as a first field), the first field indicating a discard timer duration for a PDU Set. That is, PDCP-Config IE in the RRCReconfiguration message may be enhanced, a new field named such as discardTimerPS is added to indicate that it is a discard timer for a PDU Set (or XR).

In the above embodiments, the first field may be a sequence which includes one or more groups of PDU Set Importance and corresponding discard timer durations.

In the above embodiments, each group of configurations in the sequence may further include a QoS flow identifier (QFI), and the same PDU Set Importance in different QoS flow identifiers corresponds to different discard timer durations. That is, the same PDU Set Importance in different QoS flows may be configured with different discard timer values.

In the above embodiments, if the first field is configured with the QoS flow identifier, the terminal equipment may check a SDAP header at a PDCP layer to obtain a QFI of a PDCP SDU.

According to the above embodiments, description (such as *PDCP-Config* IE) of TS 38.331 may be enhanced. For example, TS 38.331 may include the following description:

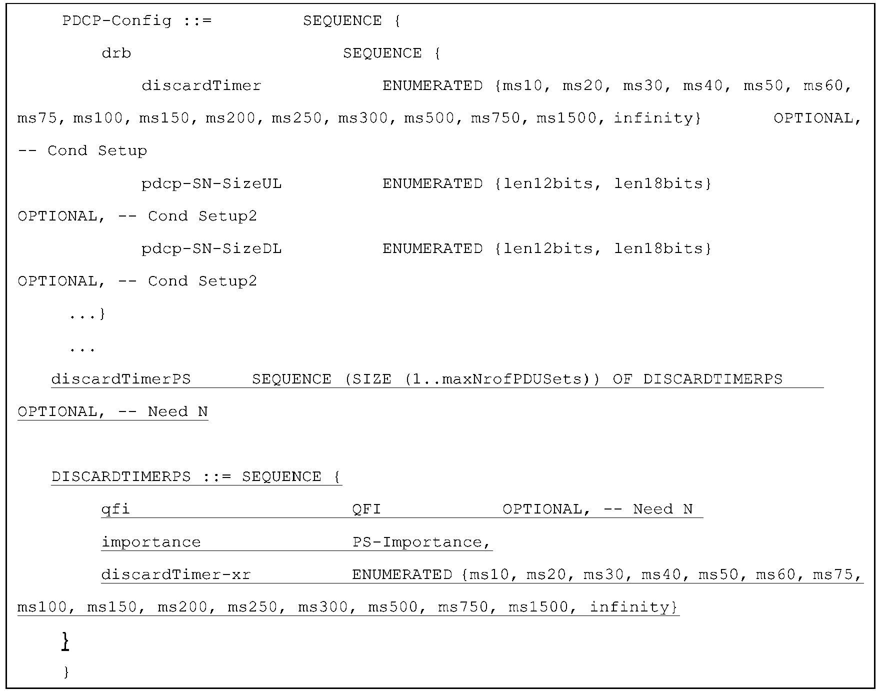

In some further embodiments, the network device configures a discard timer value (duration) for each RLC bearer of the terminal equipment. That is, for an RLC bearer (RLC entity) including the PDU Set, a discard timer duration is configured.

In the above embodiments, the terminal equipment may receive configuration information transmitted by the network device (referred to as second configuration information), the second configuration information including a discard timer duration configured by the network device for each RLC bearer including the PDU Set. Thereby, the terminal equipment may set or confirm or obtain the duration of the discard timer according to the second configuration information.

In the embodiments of the present disclosure, as shown in FIG. 1, FIG. 1 shows mapping from a PDU Set to a DRB. At a DPCP layer, a transmitting PDCP entity further needs to further map data (such as a PDCP PDU) to an RLC entity, finally corresponding to a logical channel of a MAC layer.

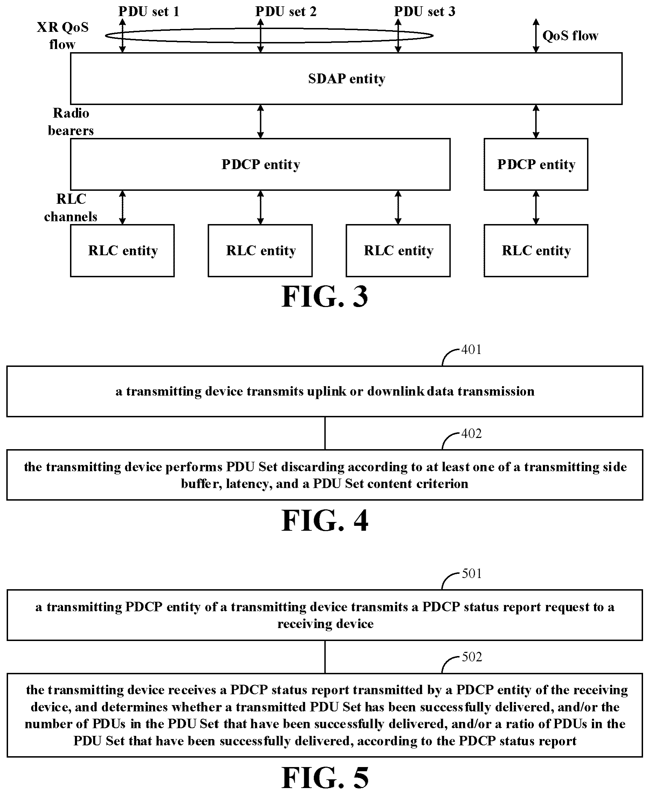

FIG. 3 is a schematic diagram of an example of a mapping structure of a PDU Set at Layer 2, showing a situation of mapping data flows with different PDU Set Importance to resources of an access network, including mapping from the PDU Set to a DRB and to an RLC entity. These data, named such as a collection of PDU Sets with the same importance or priority, may be identified using a PDU Set importance or directly using a PDU Set (if each PDU Set is regarded as an independent category).

As shown in FIG. 3, in this example, a mapping structure of the PDU Set at layer 2 is shown. Multiple types of PDU Sets may be multiplexed into an XR QoS flow at a NAS layer, then one-to-one mapping from the QoS flow to the DRB may be performed in the RAN. At the PDCP layer, a PDCP entity de-multiplex data in the DRB to different RLC (radio link control) bearers according to a PDU Set Importance. In this way, one PDCP entity is associated with multiple RLC entities.

In some embodiments, the terminal equipment determines a discard timer duration corresponding to a PDCP SDU according to an RLC entity associated with the PDCP SDU.

In the above embodiments, since different PDU Sets in a DRB may be assigned to different RLC bearers, discard timer durations of the PDU Sets may be obtained by configuring for the RLC bearers. The PDCP entity of the terminal equipment may determine the discard timer duration of the SDU by determining an RLC entity associated with the PDCP SDU.

According to the above embodiments, description of TS 38.323 may be enhanced. For example, TS 38.323 may include the following description:

| |
|---|
| The transmitting PDCP entity shall maintain the following timers: |
| *a) discardTimer* |
| This timer is configured only for DRBs. The duration of the timer is configured by upper layers TS 38.331 [3]. In the transmitter, a new timer is started upon reception of an SDU from upper layer. For SDU belonging to an (application level) PDU Set, the duration of the timer is according to the associated RLC entity and configured by upper layers TS 38.331. |

In the above embodiments, the network device may perform the above configuration via RRC signaling, that is, the second configuration information may be included in the RRC signaling. The RRC signaling may be an RRC reconfiguration (RRCReconfiguration) message. For example, an RLC bearer configuration IE of the RRC reconfiguration message includes a certain field (referred to as a second field), the second field indicating a discard timer duration for a PDU Set. That is, RLC-BearerConfig IE in the RRCReconfiguration message may be enhanced, a new field named such as discardTimer-xr is added to indicate that it is a discard timer for a PDU Set (or XR).

In the above embodiments, the second field may be of an enumeration type, including one or more optional discard timer values.

According to the above embodiments, description (such as *RLC-BearerConfig* IE) of TS 38.331 may be enhanced. For example, TS 38.331 may include the following description:

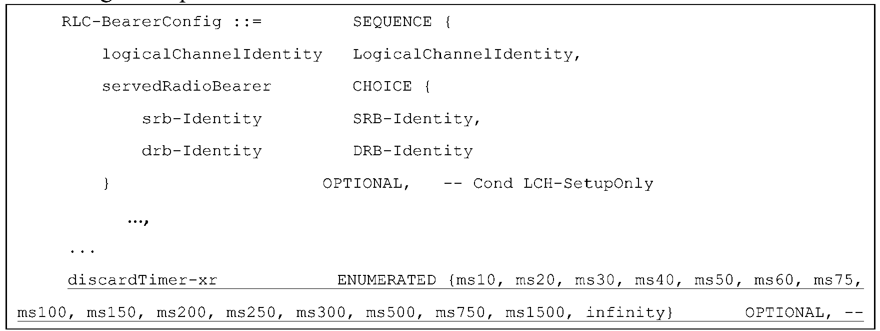

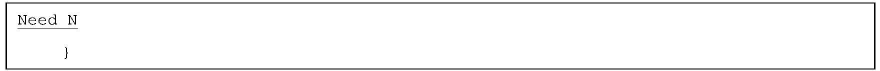

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the problem of data discarding for the PDU Set in a wireless access network is solved, XR and media service applications may be supported better. Furthermore, a discard timer is enhanced at a PDCP layer, which improves the transmission performance of the XRM service. Thereby, differentiated handling of the PDU Set may be guaranteed, and an integrated data handling demand of the PDU Set may be satisfied.

### Embodiments of a second aspect

Embodiments of the present disclosure provide a data processing method, which is described from a transmitting device side. The transmitting device may be a terminal equipment or a network device; correspondingly, the receiving device may be a network device or a terminal equipment.

FIG. 4 is a schematic diagram of a data processing method in the embodiments of the present disclosure. Referring to FIG. 4, the method includes:
401: a transmitting device transmits uplink or downlink data transmission; and
402: the transmitting device performs PDU Set discarding according to at least one of a transmitting side buffer, latency, and a PDU Set content criterion.

It should be noted that the above FIG. 4 only schematically describes the embodiments of the present disclosure, but the present disclosure is not limited to this. For example, an execution step of each operation may be adjusted appropriately, moreover some other operations may be increased or operations therein may be reduced. Persons skilled in the art may make appropriate modifications according to the above contents, not limited to the records in the above FIG. 4.

According to the above embodiments, the transmitting device detects congestion or determines whether to perform data discarding according to at least one of a transmitting side buffer, latency, and a PDU Set content criterion, and discards a PDU Set with low importance when congestion occurs or data discarding is required, then the transmitting side buffer may be relieved to alleviate congestion, reduce data delay, and ensure transmission of data with high importance, thereby improving transmission performance and user experience.

In some embodiments, the transmitting device may perform PDU Set discarding at a PDCP layer, a PDU in the PDU Set corresponds to a PDCP SDU at the PDCP layer. PDU Set-level discarding is performed at the PDCP layer, that is, a transmitting PDCP entity discards all stored PDCP SDUs belonging to a certain PDU Set, and corresponding PDCP PDUs.

In some embodiments, the transmitting device detects congestion according to transmitting side buffer, and then performs PDU Set discarding, which may be that the transmitting device determines a buffered data amount and performs PDU Set discarding in a case where the buffered data amount exceeds a first threshold.

In the above embodiment, the buffered data amount may be a buffer size in a MAC layer buffer status report. That is, the transmitter side may take calculation of a data amount performed for MAC buffer status report as a basis for determining buffer congestion. For example, based on a data amount calculation process of the PDCP layer and the RLC layer, a buffer status of each logical channel may be obtained, that is, a sum of a PDCP entity data amount and an RLC entity data amount corresponding to the logical channel, thereby a buffer status of a logical channel group may also be obtained.

In the above embodiment, the transmitting device may further calculate a buffered data amount by taking PDU set or PDU set importance as a granularity. For example, the transmitting device may obtain a buffer status at the PDCP layer through calculation of a data amount by the PDCP entity for the PDU Set or PDU Set Importance, thereby to detect congestion.

By taking "the transmitting device calculates a buffered data amount by taking PDU Set Importance as a granularity" as an example, in order to determine whether data congestion occurs, a transmitting PDCP entity of the transmitting device may consider the following PDCP data amount for a certain PDU Set Importance:
- a PDCP SDU corresponding to a certain PDU Set Importance for which a PDCP data PDU has not been constructed;
- a PDCP data PDU corresponding to a certain PDU Set Importance which has not been submitted to a lower layer;
- for an acknowledged mode (AM) DRB, a PDCP SDU corresponding to a certain PDU Set Importance to be retransmitted during PDCP re-establishment; and
- for an acknowledged mode (AM) DRB, a PDCP data PDU corresponding to a certain PDU Set Importance to be retransmitted during data recovery.

By taking "the transmitting device calculates a buffered data amount by taking PDU Set as a granularity" as an example, as shown in FIG. 3, since different PDU Set Importance or different types of PDU Sets (such as combinations of several importance) will be associated with different RLC entities, the transmitting device may obtain a buffer status by calculating a data amount by each RLC entity (a data amount at the RLC layer) at the RLC layer, thereby to obtain RLC buffered data amounts of different PDU Sets.

In the above example, in order to determine whether data congestion occurs or whether data needs to be discarded, the RLC entity of the transmitting device may consider the following RLC data amount, that is, the data amount at the RLC layer may be at least one of the following:
- an RLC SDU and an RLC SDU segment that have not been included in an RLC data PDU;
- an RLC data PDU waiting for initial transmission;
- for an acknowledged mode RLC, an RLC data PDU waiting to be retransmitted.

That is, the RLC entity of the transmitting device may calculate at least one of the above to obtain RLC buffered data amounts of different PDU sets.

In the above embodiments, the buffered data amount corresponding to the PDU Set Importance may be a sum of a PDCP data amount for the PDU Set Importance in the PDCP entity of the transmitting device and a data amount in a corresponding RLC entity. That is, the sum of a PDCP data amount for a certain PDU Set Importance in the PDCP entity and a data amount in a corresponding RLC entity may be taken as a buffered data amount corresponding to the PDU Set Importance.

In each of the above embodiments, by taking PDU Set Importance as an example, the present disclosure is not limited to this, the PDU Set Importance may further be replaced with other identifiers, such as a type identifier, etc., for performing classifying and counting on buffered data amounts corresponding to PDU Sets in a DRB.

In the above embodiments, the transmitting device performs PDU Set discarding, which may be that the transmitting device discards a PDU Set with a PDU Set Importance lower than or equal to a threshold (referred to as a fifth threshold); alternatively, when a buffered data amount for a PDU Set Importance (such as a certain logical channel) exceeds a threshold (referred to as a sixth threshold), the transmitting device discards a PDU Set corresponding to the PDU Set Importance.

That is, the transmitting device may determine whether to perform data discarding by comparing a buffered data amount with a threshold. Here, the buffered data amount may be various amounts mentioned above, such as a buffer size of a logical channel, a buffer size of a logical channel group, a PDCP data amount for a certain PDU Set Importance, an RLC data amount for a certain PDU Set Importance, a sum of a PDCP data amount and an RLC data amount for a certain PDU Set Importance, etc. Correspondingly, the thresholds may further be thresholds for the above-mentioned various buffer granularities, which may be in the unit of bytes, however the present disclosure is not limited to this.

In some other embodiments, the transmitting device detects congestion according to latency, and then performs PDU Set discarding, which may be that the transmitting device determines data transmission delay during a predetermined time period, and performs PDU Set discarding in a case where the delay is greater than a second threshold. That is, the transmitting device may set a measurement window for a period of time to obtain statistical data (such as an average value) of data transmission delay during this period of time, compare it with a threshold, and perform data discarding if exceeding the threshold.

In the above embodiments, a granularity of measurement may be for an entire link, for each logical channel, logical channel group, each service traffic, each QoS flow, each PDU Set, each PDU Set type, each PDU Set Importance, etc. That is, the transmitting device may determine data transmission delay for one of the above during the predetermined time period. Correspondingly, the threshold (the second threshold) may further be a threshold for the above-mentioned various delay measurement granularities.

In the above embodiments, the transmitting device performs PDU Set discarding, which may be that the transmitting device discards a PDU Set with a PDU Set Importance lower than or equal to a threshold (referred to as a seventh threshold); alternatively, when a delay measurement value for a PDU Set Importance exceeds a threshold (referred to as an eighth threshold), the transmitting device discards a PDU Set corresponding to the PDU Set Importance.

For example, if measurement delay of a link is higher than the second threshold for the link (such as in milliseconds), it is considered that the link is congested. For another example, if measurement delay of a certain logical channel is higher than the second threshold for the logical channel, it is considered that the logical channel is congested, and the PDU Set discarding needs to be performed, and so on.

In some further embodiments, the transmitting device determines whether to perform PDU Set discarding according to a PDU Set content criterion, which may be that the transmitting device determines whether a PDU Set corresponding to data transmission conforms to a pre-defined PDU Set content criterion; in a case where the PDU Set corresponding to the data transmission conforms to the pre-defined PDU Set content criterion, the PDU Set discarding is performed.

In the above embodiments, unlike the PDU Set discarding is performed according to a transmitting side buffer or latency, determination in this embodiment is not related to data congestion but is used to determine whether to perform discarding for specific data. The present disclosure is not limited to this. This embodiment may further be combined with an embodiment in which PDU Set discarding is performed according to a transmitting side buffer or latency. For example, in a case where it is determined to be in congestion according to a transmitting side buffer or latency, data discarding is then performed according to a PDU Set content criterion.

In the above embodiments, the PDU Set content criterion refers to a criterion for determining whether a PDU Set may be regarded as successfully delivered.

For example, if a certain PDU Set is configured with a PSII (indicating that a PDU Set integrated indication is true), this PDU Set is useful to a receiving side only in a case where all bits are delivered correctly, that is, any error cannot be tolerated. In this way, if a certain PDU Set is configured with a PSII, when it is determined that a PDU is not successfully delivered, the PDU Set to which the PDU belongs may be discarded.

For another example, a PDU Set may be configured with a PDU Set content ratio for indicating that the PDU Set is useful to the receiving side only when the X% bits of the PDU Set are delivered correctly, where X is a PDU Set content ratio. A scenario this situation is aimed at is that an application layer uses FEC (Forward Error Correction) on a PDU Set, which may tolerate an error rate of 1-X%. In this way, if the PDU Set is configured with a content ratio, when it is determined that the number of PDUs that are not successfully delivered (or lost) in the PDU Set exceeds a threshold (referred to as a third threshold), for example, the third threshold = the number of PDUs in the PDU Set *(1-X%), the PDU Set is considered not to have been successfully delivered, and the PDU Set may be discarded. Therefore, in order to save resources, there is no need to transmit the remaining PDUs.

For another example, it may further be determined according to the number of PDUs that have been successfully delivered. If the PDU Set is configured with the content ratio X and it is determined that the number of PDUs that have been successfully delivered exceeds the third threshold, for example, the third threshold = the number of PDUs in the PDU Set * X%, this PDU Set is considered to have been successfully delivered, the transmitting side may discard this PDU Set, that is, there is no need to transmit the remaining PDUs, which saves network resources.

In the above embodiments, the transmitting device performs PDU Set discarding, which may be that, when the PDU Set Importance corresponding to the PDU Set is lower than or equal to a threshold (referred to as a ninth threshold), the transmitting device discards the PDU Set.

In each of the above embodiments, each threshold may be predefined, or configured by the network device, for example is configured via RRC signaling. The present disclosure does not limit specific configuration modes.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the problem of data discarding for the PDU Set in a wireless access network is solved, XR and media service applications may be supported better. In addition, in the case of network congestion or based on a content criterion, some data with low importance are discarded to improve transmission performance of the XRM service. Thereby, differentiated handling of the PDU Set may be guaranteed, and an integrated data handling demand of the PDU Set may be satisfied.

### Embodiments of a third aspect

Embodiments of the present disclosure provide a data processing method, which is described from a transmitting device side. The transmitting device may be a terminal equipment or a network device; correspondingly, the receiving device may be a network device or a terminal equipment.

FIG. 5 is a schematic diagram of a data processing method in the embodiments of the present disclosure. As shown in FIG. 5, the method includes:
501: a transmitting PDCP entity of a transmitting device transmits a PDCP status report polling to a receiving device; and
502: the transmitting device receives a PDCP status report transmitted by a PDCP entity of the receiving device, and determines whether a transmitted PDU Set has been successfully delivered, and/or the number of PDUs in the PDU Set that have been successfully delivered, and/or a ratio of PDUs in the PDU Set that have been successfully delivered, according to the PDCP status report.

It should be noted that the above FIG. 5 only schematically describes the embodiments of the present disclosure, but the present disclosure is not limited to this. For example, an execution step of each operation may be adjusted appropriately, moreover some other operations may be increased or operations therein may be reduced. Persons skilled in the art may make appropriate modifications according to the above contents, not limited to the records in the above FIG. 5.

According to the above embodiment, a transmitting PDCP entity of a transmitting side adds a request (poll) information for requesting a PDCP entity of a receiving side to transmit a PDCP status report. The transmitting PDCP entity of the transmitting side obtains information such as whether a PDU Set has been completely successfully delivered, the number and a ratio of PDUs in the PDU Set that have been successfully delivered, according to the received PDCP status report. Thereby, the transmitting side may learn a delivery status of each PDCP SDU (such as the number of PDUs that have been successfully delivered or have failed to be delivered, etc.) via the PDCP status report. Based on the embodiments of the second aspect, the problem on how the transmitting side obtains a delivery status of a PDCP SDU is further solved.

In the above embodiments, the PDCP status report may be used for an AM DRB configured with statusReportRequired, and is triggered by a receiving PDCP entity in the case of such as PDCP entity re-establishment, data recovery, or uplink data switch.

In some embodiments, the transmitting PDCP entity of the transmitting device transmits the PDCP status report polling to a receiving device via a PDCP control PDU. That is, a PDCP control PDU is added to the transmitting side for requesting a peer side (a receiving side) to report a PDCP status, this PDCP control PDU may, for example, be called a Control PDU for PDCP status report polling. In addition, the PDCP control PDU may only include a PDCP header, for example, 0 is used as a D/C bit to indicate that it is a control PDU, and a new PDU Type (for example a binary bit is 100) is defined to indicate that this PDU is a PDCP status report polling. The above description is just an example to illustrate. There may be other implementations for this PDCP control PDU.

In some other embodiments, the transmitting PDCP entity of the transmitting device transmits the PDCP status report polling to a receiving device via a bit in a PDCP data PDU header. That is, the transmitting side may use a bit in the PDCP data PDU header to indicate whether to request a PDCP status report. For example, in a header of a data PDU for a DRB, there are multiple reserved bits, one of the bits may be used as a poll bit field, such as called a P field, which indicates whether the transmitting PDCP entity of the transmitting side requests a status report to the PDCP entity of the peer side (the receiving side). For example, when this field is 1, it indicates requesting a status report. The above description is just an example for illustration, the present application does not make limitations in this regard.

In the embodiments of the present disclosure, for the transmitting PDCP entity of the AM DRB, the PDCP status report may be requested in the following situations, that is, the transmitting PDCP entity of the transmitting device may transmit a PDCP status report polling in a case where at least one of the following situations is satisfied, thereby to trigger the PDCP entity of the peer side to transmit a status report:
when an upper layer indicates to transmit a PDCP status report polling;
in a case where congestion is detected, for example, when it is determined according to a transmitting side buffer and/or latency that data discarding needs to be performed. Embodiments of the second aspect may be specifically referred to.

In the embodiments of the present disclosure, the transmitting device may be a terminal equipment, that is, the terminal equipment may request a network device to transmit a status report to perform discarding for uplink data. In addition, the transmitting device may be a network device, that is, the network device requests the terminal equipment to transmit a status report to perform discarding for downlink data.

In each of the above embodiments, when a PDCP status report polling is received, the receiving PDCP entity may trigger a PDCP status report. For example, for an AM DRB, when the receiving side receives the PDCP status report polling, a receiving PDCP entity of the receiving side may trigger the PDCP status report.

According to the above embodiments, description of TS 38.323 may be enhanced. For example, TS 38.323 may include the following description:

| | |
|---|---|
| For AM DRBs configured by upper layers to send a PDCP status report in the uplink (*statusReportRequired* in TS 38.331 [3]), the receiving PDCP entity shall trigger a PDCP status report when: | |
| | - upper layer requests a PDCP entity re-establishment; |
| | - upper layer requests a PDCP data recovery; |
| | - upper layer requests a uplink data switching; |
| | - upper layer reconfigures the PDCP entity to release DAPS and *daps-SourceRelease* is configured in TS 38.331 [3]; |
| | - upon reception of a PDCP status report polling or a PDCP Data PDU with the P field set to '1'. |

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the transmitting side may learn a delivery status of each PDCP SDU (the number of PDUs that have been successfully delivered or have failed to be delivered, etc.) via the PDCP status report, thereby determine whether to discard data accordingly.

### Embodiments of a fourth aspect

Embodiments of the present disclosure provide a data processing method, which is described from a terminal equipment side.

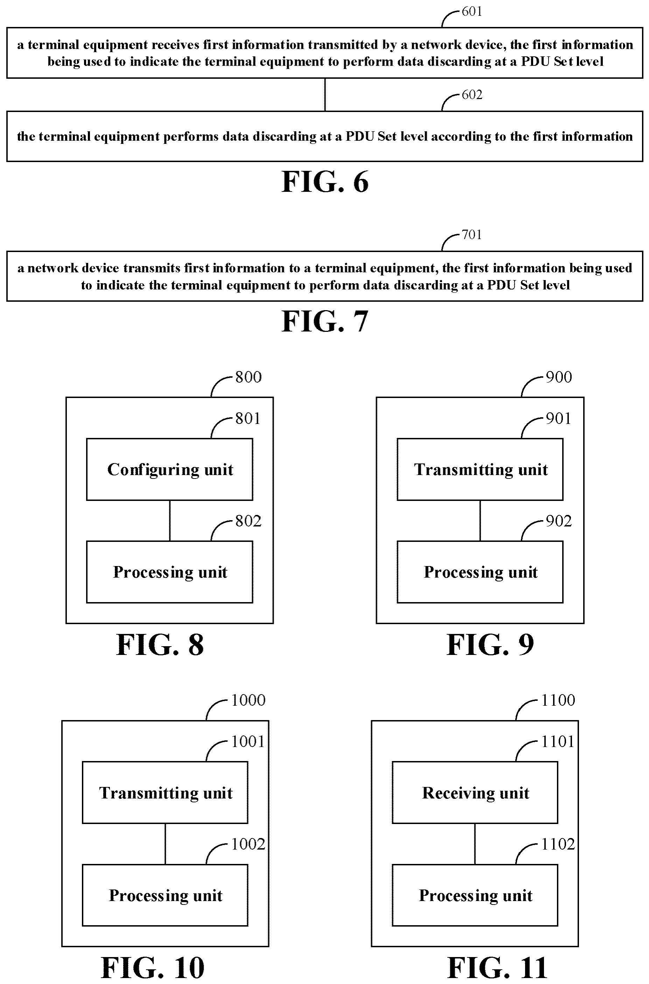

FIG. 6 is a schematic diagram of a data processing method in the embodiments of the present disclosure. As shown in FIG. 6, the method includes:
601: a terminal equipment receives first information transmitted by a network device, the first information being used to indicate the terminal equipment to perform data discarding at a PDU Set level; and
602: the terminal equipment performs data discarding at a PDU Set level according to the first information.

It should be noted that the above FIG. 6 only schematically describes the embodiments of the present disclosure, but the present disclosure is not limited to this. For example, an execution step of each operation may be adjusted appropriately, moreover some other operations may be increased or operations therein may be reduced. Persons skilled in the art may make appropriate modifications according to the above contents, not limited to the records in the above FIG. 6.

According to the above embodiment, congestion is detected by a network side, then the network side indicates a UE to perform data discarding at a PDU Set level. Thereby, the terminal equipment may perform data discarding according to an indication from the network side, thereby the transmission performance of the XRM service is improved.

In the above embodiments, congestion detection at the network side may be determined by implementation of the network device. Furthermore, the network side may indicate via signaling a transmitting PDCP entity of the terminal equipment to discard certain PDU Sets. For example, the network device may indicate at least one of the following via the first information:
a PDU Set Importance;
a QoS flow identifier and a PDU Set Importance;
a DRB identifier; and
a DRB identifier and a PDU Set Importance.

Thereby, the UE is informed to discard a data SDU corresponding to an indicated identifier.

In the above embodiments, if the indication includes the PDU Set Importance, a PDU Set equal to or less than the Importance value may be discarded. In addition, at the UE side, data SDU discarding is still performed at the PDCP layer.

In some embodiments, the first information is transmitted via RRC signaling, or is transmitted via a PDCP control PDU, or is transmitted via an MAC CE. That is, the network side indication may be implemented by RRC signaling, or by using a PDCP control PDU, or by using a MAC CE.

In some embodiments, the first information indicates a DRB identifier and a PDU Set Importance. The terminal equipment may discard all stored PDCP SDUs corresponding to PDUs in a PDU Set with an Importance value being equal to or less than a value of the PDU Set Importance in a DRB corresponding to the DRB identifier, and corresponding PDCP PDUs.

By taking "the first information is transmitted via RRC signaling" as an example, the UE receives an RRC message which includes a DRB identifier + an Importance value, which is taken as a data discard indication, an RRC layer notifies a lower layer of this indication. The transmitting PDCP entity corresponding to the DRB identifier will receive an indication from the higher layer and then discard all stored PDCP SDUs corresponding to PDUs in a PDU Set with an Importance value being equal to or less than the Importance value, and corresponding PDCP PDUs.

In some embodiments, the first information indicates a PDU Set Importance. The terminal equipment discards all stored PDCP SDUs corresponding to PDUs in a PDU Set with an Importance value being equal to or less than a value of the PDU Set Importance, and corresponding PDCP PDUs.

By taking "the first information is transmitted via a PDCP control PDU" as an example, the PDCP control PDU only includes Importance information, a new PDCP control PDU may be created, for example called a PDCP Control PDU for discard, and may be transmitted by the network side. When the terminal equipment receives the PDCP Control PDU for discard, the transmitting PDCP entity will discard all stored PDCP SDUs corresponding to PDUs in a PDU set with an Importance value being equal to or less than a value of the Importance in the control PDU, and corresponding PDCP PDUs.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, the terminal equipment may perform data discarding according to an indication from the network side, thereby the transmission performance of the XRM service is improved.

### Embodiments of a fifth aspect

Embodiments of the present disclosure further provide a data processing method, which is described from a network device side, being processing on a network side corresponding to the method in the embodiments of the fourth aspect, the same contents as the embodiments of the fourth aspect are not repeated.

FIG. 7 is a schematic diagram of a data processing method in the embodiments of the present disclosure. As shown in FIG. 7, the method includes:
701: a network device transmits first information to a terminal equipment, the first information being used to indicate the terminal equipment to perform data discarding at a PDU Set level.

In the above embodiments, the first information may indicate at least one of the following:
a PDU Set Importance;
a QoS flow identifier and a PDU Set Importance;
a DRB identifier; and
a DRB identifier and a PDU Set Importance.

In the above embodiments, the first information may be transmitted via RRC signaling, or may be transmitted via a PDCP control PDU, or may be transmitted via an MAC CE, the present disclosure does not make limitations in this regard.

In some embodiments, the first information indicates a DRB identifier and a PDU Set Importance, thereby the terminal equipment may discard all stored PDCP SDUs corresponding to PDUs in a PDU set with an importance being equal to or less than a value of the PDU Set Importance in a DRB corresponding to the DRB identifier, and corresponding PDCP PDUs.

In some embodiments, the first information indicates a PDU Set Importance, thereby the terminal equipment may discard all stored PDCP SDUs corresponding to PDUs in a PDU set with an Importance value being equal to or less than a value of the PDU Set Importance, and corresponding PDCP PDUs.

Processing of the network device has been described in the embodiments of the fourth aspect, and is not repeated here.

According to the method in the embodiments of the present disclosure, the terminal equipment may perform data discarding according to an indication from the network side, thereby the transmission performance of the XRM service is improved.

### Embodiments of a sixth aspect

Embodiments of the present disclosure provide a data processing apparatus.

FIG. 8 is a schematic diagram of a data processing apparatus in the embodiments of the present disclosure. The apparatus may, for example, be a terminal equipment, or may be one or more parts or components configured in the terminal equipment. The principle of the apparatus to solve the problem is same as the method in the embodiments of the first aspect, thus its specific implementation can refer to the implementation of the method in the embodiments of the first aspect, the same contents will not be repeated.

As shown in FIG. 8, the data processing apparatus 800 comprises:
a setting unit 801 configured to set a discard timer duration for a PDU Set; and
a processing unit 802 configured to releases a PDU Set corresponding to an expired discard timer at a PDCP layer when a discard timer expires.

In some embodiments, the setting unit 801 sets a discard timer duration for each PDU Set based on a PSDB of the PDU Set.

In some embodiments, the setting unit 801 receives first configuration information transmitted by the network device, the first configuration information including a discard timer duration, configured by the network device for a PDU Set Importance in each PDCP entity; the setting unit 801 may set a discard timer duration according to the first configuration information.

In the above embodiments, PDU Sets with the same PDU Set Importance have the same discard timer duration.

In the above embodiments, the first configuration information may be included in RRC signaling. The RRC signaling, for example, may be an RRC reconfiguration message, a PDCP configuration IE of the RRC reconfiguration message includes a first field, the first field indicating a discard timer duration for a PDU Set.

In the above embodiments, the first field may be a sequence which includes one or more groups of PDU Set Importance and corresponding discard timer durations. Each group of configurations in the sequence may further include a QoS flow identifier, and the same PDU Set Importance in different QoS flow identifiers corresponds to different discard timer durations.

In some embodiments, the setting unit 801 receives second configuration information transmitted by the network device, the second configuration information including a discard timer duration configured by the network device for each RLC bearer including the PDU Set; the setting unit 801 may set a discard timer duration according to the second configuration information.

In the above embodiments, the processing unit 802 may determine a discard timer duration corresponding to a PDCP SDU according to an RLC entity associated with the PDCP SDU.

In the above embodiments, the second configuration information may be included in RRC signaling. The RRC signaling, for example, may be an RRC reconfiguration message, an RLC bearer configuration IE of the RRC reconfiguration message includes a second field, the second field indicating a discard timer a duration for a PDU Set.

FIG. 9 is another schematic diagram of a data processing apparatus in the embodiments of the present disclosure. The apparatus may, for example, be a transmitting device, or may be one or more parts or components configured in the transmitting device. The transmitting device may be a terminal equipment or may be a network device. The principle of the apparatus to solve the problem is same as the method in the embodiments of the second aspect, thus for its specific implementation, the implementation of the method in the embodiments of the second aspect may be referred to, the same contents will not be repeated.

As shown in FIG. 9, the data processing apparatus 900 comprises:
a transmitting unit 901 configured to transmit uplink or downlink data transmission; and
a processing unit 902 configured to perform PDU Set discarding according to at least one of a transmitting side buffer, latency, and a PDU Set content criterion.

In some embodiments, that the processing unit 902 performs PDU Set discarding according to a transmitting side buffer comprises:
the processing unit 902 determines a buffered data amount and performs PDU Set discarding in a case where the buffered data amount exceeds a first threshold.

In the above embodiment, the buffered data amount may be a buffer size in a MAC layer buffer status report.

In the above embodiment, the processing unit 902 may calculate the buffered data amount by taking PDU Set or PDU Set importance as a granularity.

For example, that the processing unit 902 calculates the buffered data amount by taking PDU Set importance as a granularity, may be that the processing unit 902 calculates at least one of the following via a transmitting PDCP entity:
a PDCP SDU corresponding to a PDU Set Importance for which a PDCP data PDU has not been constructed;
a PDCP data PDU corresponding to a PDU set importance which has not been submitted to a lower layer;
for an acknowledged mode DRB, a PDCP SDU corresponding to a PDU Set Importance to be retransmitted during PDCP re-establishment; and
for an acknowledged mode DRB, a PDCP data PDU corresponding to a PDU Set importance to be retransmitted during data recovery.

In the above embodiments, the buffered data amount corresponding to the PDU Set Importance may be a sum of a PDCP data amount for the PDU Set Importance in the PDCP entity of the transmitting device and a data amount in a corresponding RLC entity.

In addition, for another example, that the processing unit 902 calculates the buffered data amount by taking PDU Set as a granularity, may be that the processing unit 902 calculates a data amount at an RLC layer via an RLC entity, to obtain RLC buffered data amounts of different PDU Sets.

The RLC entity of the processing unit 902 may calculate at least one of the following:
an RLC SDU and an RLC SDU segment that have not been included in an RLC data PDU;
an RLC data PDU waiting for initial transmission;
for an acknowledged mode RLC, an RLC data PDU waiting to be retransmitted.

In the above embodiments, the processing unit 902 performs PDU Set discarding, which may be that the processing unit 902 discards a PDU Set with a PDU Set Importance lower than a fifth threshold; or may be that the processing unit 902 discards a PDU Set corresponding to a PDU Set Importance when a buffered data amount for the PDU Set Importance is greater than a sixth threshold.

In some other embodiments, that the processing unit 902 performs PDU Set discarding according to latency comprises that:
the processing unit 902 determines data transmission delay during a predetermined time period, and performs PDU Set discarding in a case where the delay is greater than a second threshold.

In the above embodiments, the processing unit 902 may determine data transmission delay for one of the following during the predetermined time periods:
an entire link;
each logical channel;
a logical channel group;
each service flow;
each QoS flow;
each PDU Set;
each PDU Set type;
each PDU Set Importance.

In the above embodiments, the processing unit 902 performs PDU Set discarding, which may be that the processing unit 902 discards a PDU Set with a PDU Set Importance lower than a seventh threshold; or may be that the processing unit 902 discards a PDU Set corresponding to a PDU Set Importance when a delay measurement value for the PDU Set Importance is greater than an eighth threshold.

In some further embodiments, that the processing unit 902 performs PDU Set discarding according to a PDU Set content criterion comprises that:
the processing unit 902 determines whether the PDU Set corresponding to the data transmission satisfies a pre-defined PDU Set content criterion; and performs PDU Set discarding in a case where the PDU Set corresponding to the data transmission satisfies the pre-defined PDU Set content criterion.

In the above embodiments, for example, if a PDU set is configured with a PSII, when it is determined that a PDU in the PDU set has not been successfully delivered, the processing unit 902 discards the PDU set to which the PDU belongs. For another example, if a PDU set is configured with a content ratio, when it is determined that the number of PDUs in the PDU set that have not been successfully delivered exceeds a third threshold, the processing unit 902 discards the PDU set. For a further example, if a PDU set is configured with a content ratio and it is determined that the number of PDUs that have been successfully delivered exceeds a fourth threshold, the processing unit 902 discards the PDU set.

In the above embodiments, the processing unit 902 performs PDU Set discarding, which may be that the processing unit 902 discards the PDU Set when the PDU Set Importance corresponding to the PDU Set is lower than or equal to a ninth threshold.

In the embodiments of the present disclosure, the processing unit 902 may discard all stored PDCP SDUs belonging to the PDU set and corresponding PDCP PDUs via the PDCP entity.

In the embodiments of the present disclosure, each of the aforementioned thresholds (from the first threshold to the ninth threshold) may be predefined or may be configured by a network device, the present disclosure does not impose restrictions on a specific configuration method.

FIG. 10 is a further schematic diagram of a data processing apparatus in the embodiments of the present disclosure. The apparatus may, for example, be a transmitting device, or may be one or more parts or components configured in the transmitting device. The transmitting device may be a terminal equipment or may be a network device. The principle of the apparatus to solve the problem is same as the method in the embodiments of the third aspect, thus for its specific implementation, the implementation of the method in the embodiments of the third aspect may be referred to, the same contents will not be repeated.

As shown in FIG. 10, the data processing apparatus 1000 comprises:
a transmitting unit 1001 configured to transmit a PDCP status report polling to a receiving device via a transmitting PDCP entity; and
a processing unit 1002 configured to receive a PDCP status report transmitted by the PDCP entity of the receiving device, and determine whether a transmitted PDU Set has been successfully delivered, and/or the number of PDUs in the PDU Set that have been successfully delivered, and/or a ratio of PDUs in the PDU Set that have been successfully delivered, according to the PDCP status report.

In some embodiments, the transmitting unit 1001 transmits the PDCP status report polling to a receiving device via a transmitting PDCP entity and via a PDCP control PDU.

In some embodiments, the transmitting unit 1001 transmits the PDCP status report polling to a receiving device via a transmitting PDCP entity and via a bit in a PDCP data PDU header.

In some embodiments, the transmitting unit 1001 transmits the PDCP status report polling via a transmitting PDCP entity in a case where at least one of the following situations is satisfied:
when an upper layer indicates to transmit a PDCP status report polling;
when it is determined according to a transmitting side buffer and/or latency that PDU Set discarding needs to be performed (the embodiments of the second aspect may be specifically referred to).

FIG. 11 is another schematic diagram of a data processing apparatus in the embodiments of the present disclosure. The apparatus may, for example, be a terminal equipment, or may be one or more parts or components configured in the terminal equipment. The principle of the apparatus to solve the problem is same as the method in the embodiments of the fourth aspect, thus for its specific implementation, the implementation of the method in the embodiments of the fourth aspect may be referred to, the same contents will not be repeated.

As shown in FIG. 11, the data processing apparatus 1100 comprises:
a receiving unit 1101 configured to receive first information transmitted by a network device, the first information being used to indicate the terminal equipment to perform data discarding at a PDU Set level; and
a processing unit 1102 configured to perform data discarding at a PDU Set level according to the first information.

In some embodiments, the first information indicates at least one of the following:
a PDU Set Importance;
a QoS flow identifier and a PDU Set Importance;
a DRB identifier; and
a DRB identifier and a PDU Set Importance.

In some embodiments, the first information is transmitted via RRC signaling, or is transmitted via a PDCP control PDU, or is transmitted via an MAC CE.

In some embodiments, the first information indicates a DRB identifier and a PDU Set Importance, the processing unit 1002 discards all stored PDCP SDUs corresponding to PDUs in a PDU set with an Importance value being equal to or less than a value of the PDU Set Importance in a DRB corresponding to the DRB identifier, and corresponding PDCP PDUs.

In some embodiments, the first information indicates a PDU Set Importance, the processing unit 1002 discards all stored PDCP SDUs corresponding to PDUs in a PDU set with an Importance value being equal to or less than a value of the PDU Set Importance, and corresponding PDCP PDUs.

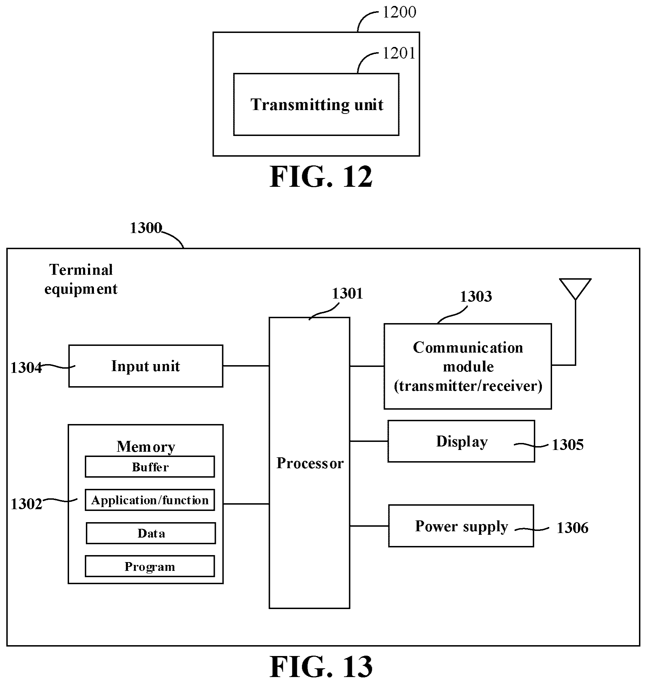

FIG. 12 is another schematic diagram of a data processing apparatus in the embodiments of the present disclosure. The apparatus may, for example, be a network device, or may be one or more parts or components configured in the network device. The principle of the apparatus to solve the problem is same as the method in the embodiments of the fifth aspect, thus for its specific implementation, the implementation of the method in the embodiments of the fifth aspect may be referred to, the same contents will not be repeated.

FIG. 12 is a schematic diagram of a data processing apparatus in the embodiments of the present disclosure. As shown in FIG. 12, the apparatus 1200 comprises:
a transmitting unit 1201 configured to transmit first information to a terminal equipment, the first information being used to indicate the terminal equipment to perform data discarding at a PDU Set level.

In the above embodiments, the first information may indicate at least one of the following:
a PDU Set Importance;
a QoS flow identifier and a PDU Set Importance;
a DRB identifier; and
a DRB identifier and a PDU Set Importance.

In the above embodiments, the first information may be transmitted via RRC signaling, or may be transmitted via a PDCP control PDU, or may be transmitted via an MAC CE, the present disclosure does not make limitations in this regard.

In some embodiments, the first information indicates a DRB identifier and a PDU Set Importance, thereby the terminal equipment may discard all stored PDCP SDUs corresponding to PDUs in a PDU set with an Importance value being equal to or less than a value of the PDU Set Importance in a DRB corresponding to the DRB identifier, and corresponding PDCP PDUs.

In some embodiments, the first information indicates a PDU Set Importance, thereby the terminal equipment may discard all stored PDCP SDUs corresponding to PDUs in a PDU set with an Importance value being equal to or less than a value of the PDU Set Importance, and corresponding PDCP PDUs.

It's worth noting that the above only describes components or modules related to the present disclosure, but the present disclosure is not limited to this. The data processing apparatuses 800, 900, 1000, 1100, 1200 in the embodiments of the present disclosure may further comprise other components or modules. For detailed contents of these components or modules, relevant technologies can be referred to.

Moreover, for the sake of simplicity, FIG. 8 to FIG. 12 only exemplarily show a connection relationship or signal direction between components or modules, however persons skilled in the art should know that various relevant technologies such as bus connection can be used. The above components or modules may be realized by a hardware facility such as a processor, a memory, a transmitter, a receiver, etc. The embodiments of the present disclosure have no limitation to this.

According to the apparatuses in the embodiments of the present disclosure, the problem of data discarding for the PDU Set in a wireless access network is solved, XR and media service applications may be supported better. In addition, by enhancing a discard timer at a PDCP layer, or in the case of network congestion or based on a content criterion, some data with low importance are discarded to improve transmission performance of the XRM service. Thereby, differentiated handling of the PDU Set may be guaranteed, and an integrated data handling demand of the PDU Set may be satisfied.

### Embodiments of a sixth aspect

Embodiments of the present disclosure provide a communication system, comprising a terminal equipment and a network device, the terminal equipment is configured to perform the method described in the embodiments of any of the first to fourth aspects, or the network device is configured to perform the method described in the embodiments of the second or third aspect. Behaviors of the terminal equipment and the network device have been described in detail in the embodiments of the first to fourth aspects, whose contents are incorporated here and will not be repeated here.

Embodiments of the present disclosure further provide a terminal equipment, comprising a memory and a processor, the memory storing a computer program, and the processor being configured to perform the computer program to implement the method described in the embodiments of any one of the first to fourth aspects.

FIG. 13 is a schematic diagram of a terminal equipment in the embodiments of the present disclosure. As shown in FIG. 13, the terminal equipment 1300 may comprise a processor 1301 and a memory 1302; the memory 1302 stores data and programs, and is coupled to the processor 1301. It's worth noting that this figure is exemplary; other types of structures may also be used to supplement or replace this structure, so as to realize a telecommunication function or other functions.

For example, the processor 1301 may be configured to execute a program to implement the method described in the embodiments of any one of the first to fourth aspects.

As shown in FIG. 13, the terminal equipment 1300 may further comprise: a communication module 1303, an input unit 1304, a display 1305 and a power supply 1306. The functions of said components are similar to related arts, which are not repeated here. It's worth noting that the terminal equipment 1300 does not have to include all the components shown in FIG. 13, said components are not indispensable. Moreover, the terminal equipment 1300 may further include components not shown in FIG. 13, related arts may be referred to.

Embodiments of the present disclosure further provide a network device, comprising a memory and a processor, the memory storing a computer program, and the processor being configured to perform the computer program to implement the method described in the embodiments of the second aspect or the third aspect or the fifth aspect.

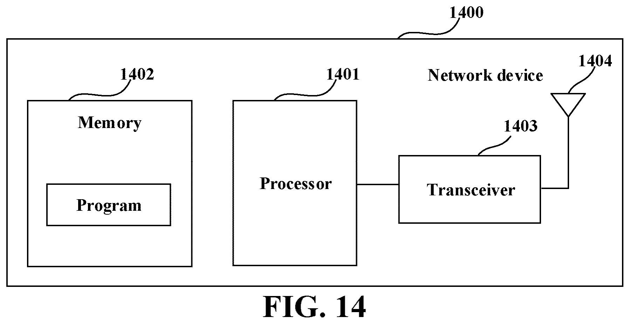

FIG. 14 is a schematic diagram of a network device in the embodiments of the present disclosure. As shown in FIG. 14, the network device 1400 may comprise: a central processing unit (CPU)1401 and a memory 1402; the memory 1402 is coupled to the central processing unit 1401. The memory 1402 may store various data; moreover, also stores a program for information processing, and executes the program under the control of the processor 1401, so as to receive various information transmitted by the terminal equipment and transmit various information to the terminal equipment.

For example, the processor 1401 may be configured to execute a program to implement the method described in the embodiments of the second, third or fifth aspect.

In addition, as shown in FIG. 14, the network device 1400 may further include: a transceiver 1403 and an antenna 1404, etc.; wherein the functions of said components are similar to relevant arts, which are not repeated here. It's worth noting that the network device 1400 does not have to include all the components shown in FIG. 14. Moreover, the network device 1400 may further include components not shown in FIG. 14, related arts may be referred to.

Embodiments of the present disclosure further provide a computer readable program, wherein when a terminal equipment executes the program, the program enables a computer to execute the method described in the embodiments of any one of the first to fourth aspects, in the terminal equipment.

Embodiments of the present disclosure further provide a storage medium in which a computer readable program is stored, wherein the computer readable program enables a computer to execute the method as described in the embodiments of any one of the first to fourth aspects, in the terminal equipment.

Embodiments of the present disclosure further provide a computer readable program, wherein when a network device executes the program, the program enables a computer to execute the method described in the embodiments of the second or third or fifth aspect, in the network device.

Embodiments of the present disclosure further provide a storage medium in which a computer readable program is stored, wherein the computer readable program enables a computer to execute the method as described in the embodiments of the second or third or fifth aspect, in the network device.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipment, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

Regarding the above implementations disclosed in this embodiment, the following supplements are further disclosed:
1. A data processing method, wherein the method includes:
   a terminal equipment sets a discard timer duration for a PDU Set; and
   the terminal equipment releases a PDU Set corresponding to an expired discard timer at a PDCP layer when a discard timer expires.
2. The method according to Supplement 1, wherein,
   the terminal equipment sets a discard timer duration for each PDU Set based on a PSDB of the PDU Set.
3. The method according to Supplement 1, wherein the method further includes:
   the terminal equipment receives first configuration information transmitted by a network device, the first configuration information including a discard timer duration configured by the network device for a PDU Set importance in each PDCP entity; and
   the terminal equipment sets the discard timer duration according to the first configuration information.
4. The method according to Supplement 3, wherein,
   PDU Sets with the same PDU Set Importance have the same discard timer duration.
5. The method according to Supplement 3, wherein,
   the first configuration information is included in RRC signaling.
6. The method according to Supplement 5, wherein,
   the RRC signaling is an RRC reconfiguration message, a PDCP configuration IE of the RRC reconfiguration message includes a first field, the first field indicating a discard timer duration for a PDU Set.
7. The method according to Supplement 6, wherein,
   the first field is a sequence which includes one or more groups of PDU Set Importance and corresponding discard timer durations.
8. The method according to Supplement 7, wherein,
   each group of configurations in the sequence further includes a QoS flow identifier, and the same PDU Set Importance in different QoS flow identifiers corresponds to different discard timer durations.
9. The method according to Supplement 1, wherein the method further includes:
   the terminal equipment receives second configuration information transmitted by the network device, the second configuration information including a discard timer duration configured by the network device for each RLC bearer including the PDU Set; and
   the terminal equipment sets the discard timer duration according to the second configuration information.
10. The method according to Supplement 9, wherein,
   the terminal equipment determines a discard timer duration corresponding to a PDCP SDU according to an RLC entity associated with the PDCP SDU.
11. The method according to Supplement 9, wherein,
   the second configuration information is included in RRC signaling.
12. The method according to Supplement 11, wherein,
   the RRC signaling is an RRC reconfiguration message, an RLC bearer configuration IE of the RRC reconfiguration message includes a second field, the second field indicating a discard timer duration for a PDU Set.
13. A data processing method, applied to a transmitting device, the transmitting device being a terminal equipment or a network device, wherein the method includes:
   the transmitting device transmits uplink or downlink data transmission; and
   the transmitting device performs PDU Set discarding according to at least one of a transmitting side buffer, latency, and a PDU Set content criterion.
14. The method according to Supplement 13, wherein, that the transmitting device performs PDU set discarding according to a transmitting side buffer comprises:
   the transmitting device determines a buffered data amount; and
   performs PDU set discarding in a case where the buffered data amount exceeds a first threshold.
15. The method according to Supplement 14, wherein,
   the buffered data amount is a buffer size in a MAC layer buffer status report.
16. The method according to Supplement 14, wherein, that the transmitting device determines a buffered data amount comprises:
   the transmitting device calculates the buffered data amount by taking PDU set or PDU set importance as a granularity.
17. The method according to Supplement 16, wherein, that the transmitting device calculates the buffered data amount by taking PDU Set importance as a granularity comprises:
   a transmitting PDCP entity of the transmitting device calculates at least one of the following:
   a PDCP SDU corresponding to a PDU Set Importance for which a PDCP data PDU has not been constructed;
   a PDCP data PDU corresponding to a PDU Set Importance which has not been submitted to a lower layer;
   for an acknowledged mode DRB, a PDCP SDU corresponding to a PDU Set Importance to be retransmitted during PDCP re-establishment; and
   for an acknowledged mode DRB, a PDCP data PDU corresponding to a PDU Set importance to be retransmitted during data recovery.
18. The method according to Supplement 16 or 17, wherein,
   the buffered data amount corresponding to the PDU Set importance is a sum of a PDCP data amount for the PDU Set importance in the PDCP entity of the transmitting device and a data amount in a corresponding RLC entity.
19. The method according to Supplement 16, wherein, that the transmitting device calculates the buffered data amount by taking PDU Set as a granularity comprises that:
   a RLC entity of the transmitting device calculates a data amount at an RLC layer to obtain RLC buffered data amounts of different PDU Sets.
20. The method according to Supplement 19, wherein, the RLC entity of the transmitting device calculates at least one of the following:
   an RLC SDU and an RLC SDU segment that have not been included in an RLC data PDU;
   an RLC data PDU waiting for initial transmission;
   for an acknowledged mode RLC, an RLC data PDU waiting to be retransmitted.
21. The method according to any one of Supplements 14-20, wherein, performing PDU Set discarding comprises that:
   the transmitting device discards a PDU Set with a PDU Set importance lower than a fifth threshold.
22. The method according to any one of Supplements 14-20, wherein, performing PDU Set discarding comprises that:
   when a buffered data amount for a PDU Set importance is greater than a sixth threshold, the transmitting device discards a PDU Set corresponding to the PDU Set importance.
23. The method according to Supplement 13, wherein, that the transmitting device performs PDU set discarding according to latency comprises:
   the transmitting device determines data transmission delay during a predetermined time period; and
   performs PDU set discarding in a case where the delay is greater than a second threshold.
24. The method according to Supplement 23, wherein, the transmitting device determines data transmission delay for one of the following during the predetermined time periods:
   an entire link;
   each logical channel;
   a logical channel group;
   each service flow;
   each QoS flow;
   each PDU Set;
   each PDU Set type;
   each PDU Set Importance.
25. The method according to Supplement 23 or 24, wherein, performing PDU Set discarding comprises that:
   the transmitting device discards a PDU Set with a PDU Set importance lower than a seventh threshold; or
   when a delay measurement value for a PDU Set importance is greater than an eighth threshold, the transmitting device discards a PDU Set corresponding to the PDU Set importance.
26. The method according to Supplement 13, wherein, that the transmitting device discards a PDU Set according to a PDU Set content criterion comprises:
   the transmitting device determines whether the PDU Set corresponding to the data transmission satisfies a pre-defined PDU Set content criterion; and
   performs PDU Set discarding in a case where the PDU Set corresponding to the data transmission satisfies the pre-defined PDU Set content criterion.
27. The method according to Supplement 26, wherein,
   if a PDU Set is configured with a PSII, when it is determined that a PDU in the PDU Set has not been successfully delivered, the PDU Set to which the PDU belongs is discarded; and/or
   if a PDU Set is configured with a content ratio, when it is determined that the number of PDUs in the PDU Set that have not been successfully delivered exceeds a third threshold, the PDU Set is discarded; and/or
   if a PDU Set is configured with a content ratio and it is determined that the number of PDUs that have been successfully delivered exceeds a fourth threshold, the PDU Set is discarded.
28. The method according to Supplement 26 or 27, wherein, performing PDU Set discarding comprises:
   when a PDU Set Importance corresponding to the PDU Set is lower than or equal to a ninth threshold, the transmitting device discards the PDU Set.
29. The method according to Supplement 13, wherein,
   the PDCP entity of the transmitting device discards all stored PDCP SDUs belonging to the PDU Set and corresponding PDCP PDUs.
30. The method according to any one of Supplements 13-29, wherein,
   the thresholds are predefined, or configured by the network device.
31. A data processing method, applied to a transmitting device, the transmitting device being a terminal equipment or a network device, wherein the method includes:
   a transmitting PDCP entity of a transmitting device transmits a PDCP status report polling to a receiving device; and
   the transmitting device receives a PDCP status report transmitted by a PDCP entity of the receiving device, and determines whether a transmitted PDU Set has been successfully delivered, and/or the number of PDUs in the PDU Set that have been successfully delivered, and/or a ratio of PDUs in the PDU Set that have been successfully delivered, according to the PDCP status report.
32. The method according to Supplement 31, wherein,
   the transmitting PDCP entity of the transmitting device transmits the PDCP status report polling to the receiving device via a PDCP control PDU.
33. The method according to Supplement 31, wherein,
   the transmitting PDCP entity of the transmitting device transmits the PDCP status report polling to the receiving device via a bit in a PDCP data PDU header.
34. The method according to Supplement 31, wherein, the transmitting PDCP entity of the transmitting device transmits the PDCP status report polling in a case where at least one of the following situations is satisfied:
   when an upper layer indicates to transmit a PDCP status report polling;
   when it is determined according to a transmitting side buffer and/or latency that PDU Set discarding needs to be performed.
35. A data processing method, wherein the method includes:
   a terminal equipment receives first information transmitted by a network device, the first information being used to indicate the terminal equipment to perform data discarding at a PDU Set level; and
   the terminal equipment performs data discarding at a PDU Set level according to the first information.
36. The method according to Supplement 35, wherein the first information indicates at least one of the following:
   a PDU Set Importance;
   a QoS flow identifier and a PDU Set Importance;
   a DRB identifier; and
   a DRB identifier and a PDU Set Importance.
37. The method according to Supplement 35, wherein,
   the first information is transmitted via RRC signaling, or is transmitted via a PDCP control PDU, or is transmitted via a MAC CE.
38. The method according to Supplement 35, wherein,
   the first information indicates a DRB identifier and a PDU Set Importance, the terminal equipment discards all stored PDCP SDUs corresponding to PDUs in a PDU Set with an Importance value being equal to or less than a value of the PDU Set Importance in a DRB corresponding to the DRB identifier, and corresponding PDCP PDUs.
39. The method according to Supplement 35, wherein,
   the first information indicates a PDU Set Importance, and the terminal equipment discards all stored PDCP SDUs corresponding to PDUs in a PDU Set with an Importance value being equal to or less than a value of the PDU Set Importance, and corresponding PDCP PDUs.
40. A data processing method, wherein the method includes:
   a network device transmits first information to a terminal equipment, the first information being used to indicate the terminal equipment to perform data discarding at a PDU Set level.
41. The method according to Supplement 40, wherein the first information indicates at least one of the following:
   a PDU Set Importance;
   a QoS flow identifier and a PDU Set Importance;
   a DRB identifier; and
   a DRB identifier and a PDU Set Importance.
42. The method according to Supplement 40, wherein,
   the first information is transmitted via RRC signaling, or is transmitted via a PDCP control PDU, or is transmitted via a MAC CE.
43. The method according to Supplement 40, wherein,
   the first information indicates a DRB identifier and a PDU Set Importance, the terminal equipment discards all stored PDCP SDUs corresponding to PDUs in a PDU Set with an Importance value being equal to or less than a value of the PDU Set Importance in a DRB corresponding to the DRB identifier, and corresponding PDCP PDUs.
44. The method according to Supplement 40, wherein,
   the first information indicates a PDU Set Importance, and the terminal equipment discards all stored PDCP SDUs corresponding to PDUs in a PDU Set with an importance being equal to or less than a value of the PDU Set Importance, and corresponding PDCP PDUs.
45. A terminal equipment, comprising a memory and a processor, the memory storing a computer program, and the processor being configured to execute the computer program to implement the method according to any one of Supplements 1 to 39.
46. A network device, comprising a memory and a processor, the memory storing a computer program, and the processor being configured to execute the computer program to implement the method according to any one of Supplements 13 to 34 and 40 to 44.
47. A communication system, comprising a terminal equipment and a network device, the terminal equipment being configured to execute the method according to any one of Supplements 1 to 39, or the network device being configured to execute the method according to any one of Supplements 13 to 34 and 40 to 44.

## Claims

1. A data processing apparatus, configured in a terminal equipment, wherein the apparatus comprises:
a setting unit configured to set a discard timer duration for a protocol data unit (PDU) Set; and
a processing unit configured to releases a PDU Set corresponding to an expired discard timer at a packet data convergence protocol (PDCP) layer when a discard timer expires.

2. The apparatus according to claim 1, wherein,
the setting unit sets a discard timer duration for each PDU Set based on a PDU Set delay budget (PSDB) of the PDU Set.

3. The apparatus according to claim 1, wherein the apparatus further comprises:
the setting unit receives first configuration information transmitted by a network device, the first configuration information including a discard timer duration configured by the network device for a PDU Set Importance in each PDCP entity; and
the setting unit sets the discard timer duration according to the first configuration information.

4. The apparatus according to claim 3, wherein,
the first configuration information is included in radio resource control (RRC) signaling.

5. A data processing apparatus, configured in a transmitting device, the transmitting device being a terminal equipment or a network device, wherein the apparatus comprises:
a transmitting unit configured to transmit uplink or downlink data transmission; and
a processing unit configured to perform PDU Set discarding according to at least one of a transmitting side buffer, latency, and a PDU Set content criterion.

6. The apparatus according to claim 5, wherein, that the processing unit performs PDU Set discarding according to a transmitting side buffer comprises:
the processing unit determines a buffered data amount; and
performs PDU Set discarding in a case where the buffered data amount exceeds a first threshold.

7. The apparatus according to claim 6, wherein,
the buffered data amount is a buffer size in a media access control (MAC) layer buffer status report.

8. The apparatus according to claim 6, wherein, that the processing unit determines the buffered data amount comprises:
the processing unit calculates the buffered data amount by taking PDU Set or PDU Set Importance as a granularity.

9. The apparatus according to claim 8, wherein, that the processing unit calculates the buffered data amount by taking PDU Set Importance as a granularity comprises:
the processing unit calculates at least one of the following via a transmitting PDCP entity:
a PDCP SDU (service data unit) corresponding to a PDU Set Importance for which a PDCP data PDU (protocol data unit) has not been constructed;
a PDCP data PDU corresponding to a PDU Set Importance which has not been submitted to a lower layer;
for an acknowledged mode data radio bearer (DRB), a PDCP SDU corresponding to a PDU Set Importance to be retransmitted during PDCP re-establishment; and
for an acknowledged mode DRB, a PDCP data PDU corresponding to a PDU Set Importance to be retransmitted during data recovery.

10. The apparatus according to claim 8, wherein,
the buffered data amount corresponding to the PDU Set Importance is a sum of a PDCP data amount for the PDU Set Importance in the PDCP entity of the transmitting device and a data amount in a corresponding radio link control (RLC) entity.

11. The apparatus according to claim 6, wherein, that the processing unit performs PDU Set discarding comprises:
the processing unit discards a PDU Set with a PDU Set Importance lower than a fifth threshold.

12. The apparatus according to claim 8, wherein, that the processing unit performs PDU Set discarding comprises:
when a buffered data amount for a PDU Set Importance is greater than a sixth threshold, the processing unit discards a PDU Set corresponding to the PDU Set Importance.

13. The apparatus according to claim 5, wherein, that the processing unit performs PDU Set discarding according to latency comprises:
the processing unit determines data transmission delay during a predetermined time period; and
performs PDU Set discarding in a case where the delay is greater than a second threshold.

14. The apparatus according to claim 5, wherein, that the processing unit performs PDU Set discarding according to a PDU Set content criterion comprises:
the processing unit determines whether the PDU Set corresponding to the data transmission satisfies a pre-defined PDU Set content criterion; and
performs PDU Set discarding in a case where the PDU Set corresponding to the data transmission satisfies the pre-defined PDU Set content criterion.

15. The apparatus according to claim 14, wherein,
if a PDU Set is configured with a PSII, when it is determined that a PDU in the PDU Set has not been successfully delivered, the PDU Set to which the PDU belongs is discarded; and/or
if a PDU Set is configured with a content ratio, when it is determined that the number of PDUs in the PDU Set that have not been successfully delivered exceeds a third threshold, the PDU Set is discarded; and/or
if a PDU Set is configured with a content ratio and it is determined that the number of PDUs that have been successfully delivered exceeds a fourth threshold, the PDU Set is discarded.

16. The apparatus according to claim 5, wherein,
the processing unit discards all stored PDCP SDUs belonging to the PDU Set and corresponding PDCP PDUs via the PDCP entity.

17. A data processing apparatus, configured in a terminal equipment, wherein the apparatus comprises:
a receiving unit configured to receive first information transmitted by a network device, the first information being used to indicate the terminal equipment to perform data discarding at a PDU Set level; and
a processing unit configured to perform data discarding at a PDU Set level according to the first information.

18. The apparatus according to claim 17, wherein the first information indicates at least one of the following:
a PDU Set Importance;
a QoS flow identifier and a PDU Set Importance;
a DRB identifier; and
a DRB identifier and a PDU Set Importance.

19. The apparatus according to claim 17, wherein,
the first information is transmitted via RRC signaling, or is transmitted via a PDCP control PDU, or is transmitted via an MAC CE.

20. The apparatus according to claim 19, wherein,
the first information indicates a PDU Set Importance, and the terminal equipment discards all stored PDCP SDUs corresponding to PDUs in a PDU Set with a PDU Set Importance value being equal to or less than a value of the PDU Set Importance, and corresponding PDCP PDUs.
